# EUROPEAN PATENT SPECIFICATION

(11) **EP 0 690 523 B1**
(45) Date of publication and mention of the grant of the patent: **23.09.1998**
(21) Application number: 94110302.0
(22) Date of filing: 01.07.1994
(51) Int. Cl.: H01R 4/24, H01R 13/514, H01R 9/22, H04Q 1/14

(54) **Modular cross connect system for telecommunication systems**
Querverbindungssystem für Telekommunikationssysteme
Système d'interconnexion pour des systèmes de télécommunication

(43) Date of publication of application: 03.01.1996
(73) Proprietor: MINNESOTA MINING AND MANUFACTURING COMPANY, Saint Paul, Minnesota 55133-3427 (US)
(72) Inventor: Schmitz, Günther, D-20357 Hamburg (DE)
(74) Representative: Patentanwälte Hauck, Graalfs, Wehnert, Döring, Siemons

(56) References cited:
- EP-A- 0 364 658
- EP-A- 0 491 260
- EP-A- 0 529 267
- WO-A-92/19023
- US-A- 5 178 558

## Description

### FIELD OF INVENTION

The invention relates to an electrical connector for the connection of at least one set of wire pairs to be connected to each other. This is of particular interest in the field of telecommunication distribution networks. The connection, or splicing, of pairs of electrical wires is more specifically of interest in the so-called cross connect systems, where wire pairs arriving from a central office, have to be distributed to the end users in an efficient manner. Typically, two pairs of wires have to be connected to each other by means that, at a later point in time, allow the modification of the connections without destroying the connectors. Furthermore, to a growing extent, connections have to be made to at least a third pair of wires for testing, half-tapping, or transfers without the interruption of the circuits.

### BACKGROUND OF THE INVENTION

Telecommunication distribution systems, by their nature, involve a high number of wire pairs to be connected. Over a long period of time, it was common to use terminal blocks, or modules, into which a multiplicity of wire pairs is inserted, which then have to be connected to a second multiplicity of pairs of corresponding wires. This is described in a number of references, such as the US Patents 3,919,495, 4,685,755, 4,964,812, 5,044,979 and 5,147,218. These terminal blocks, or modules, are used for the permanent connection of wire pairs, and do not allow the modification of the connections in a simple manner. Some of the modules are primarily used for the connection of telecommunication cables with a high number of wire pairs. Others are more specifically designed for cross connect systems. However, in these references changes are difficult to achieve. They would require the cutting off of the individual wire pairs, and connecting them to their corresponding pairs, by separate means, e.g., through the use of specific small connectors for the connection of two pairs of wires.

A typical cross connect system receives a multiplicity of wire pairs from, e.g., a central office, and another multiplicity of wire pairs arriving from the end users, or some other intermediate distribution unit. For the establishment of the connections, so-called feeder wires are inserted into the base of an elongate connector that has a base in the form of a terminal block and that can receive a multiplicity of wire pairs (e.g. ten pairs). A permanent connection of these feeder wires is achieved by some means, either through a simple tool, or by an additional component of the connector, which is pressed onto the base, thus establishing the contacts for which, typically, insulation displacement metal elements are used. This is done, both for the incoming multiplicity of wires coming from the central office, as well as that coming from either the end users or some other intermediate distribution unit. Subsequently, individual connections are made between the terminal block with the wire pairs coming from the central office, and the second terminal block with the wire pairs coming from the end users or the intermediate distribution units. This is achieved through so-called jumper wires. A preferred approach is to connect a pair of jumper wires to plugs at both ends and to mount these plugs onto the corresponding positions in the terminal blocks, onto which the feeder wires are permanently connected. This is commonly done and described in a number of references, such as the following patents or patent applications: US 4,979,209, EP 0 084 632, EP 0 220 884, and GB 2 129 630.

Furthermore, the European Patent Application, EP 0 261 332, describes a base configuration for a cross connect system which, only includes a multiplicity of terminal blocks. Another approach can be seen from the German patents, DE 41 27 896, DE 40 08 386, and DE 40 08 388 where the feeder wires are inserted into the base through the use of a simple hand tool. The connection is again achieved by the use of plugs.

Generally speaking, plugs referred to in the above cited documents are designed, so that the wire pairs can be connected to them by simple means, typically using contact elements, which have an insulation displacement feature. The connection of the wires to the plugs can be made either manually, or through the use of a simple hand tool. Typically,besides the insulation displacement portion, the contact elements have a second portion, which is designed in such a manner, that it allows a mounting onto the terminal block onto which the feeder wires are permanently connected. In some instances, as described in EP 0 220 884, it is possible to access the plug with a test probe.
More generally, the plugs have at least an insulative body and metal contact elements, which are supported in the body. The contact elements have a portion for the connection to typically one wire pair, and another portion for the connection to another contact element located in another component of the connector for the connection to another wire pair.

However, the above described references do not yield the possibility of attaching a second plug onto the first one, which to a growing extent is desirable in order to allow the so-called half-tapping, or a more permanent testing, or a modification of the connection, without any interruption. Therefore, there is an increasing need not only to connect two pairs of wires to each other, but to make an additional connection to a third pair, e.g., for an additional telephone set (so-called half-tapping) or with the increased use of data transfer communication to achieve modifications without the interruption of the circuit. This can be done when using systems according to the patents US 5,178,558 and 5,281,163. Here, cross connect systems are described in which a base with a terminal block is used, as described above, onto which the feeder wires are permanently connected and where plugs are used which can be stacked on top of each other to provide the above mentioned special features. This terminal block can also be considered as a base that is capable of supporting other components of the connector.

The above described systems, having a terminal block and plugs that can be stacked on top of each other, readily provide a high level of flexiblitiy with respect to the achievement of modifications in a cross-connect system. However, the use of terminal blocks includes the insertion of the multiplicity of wire pairs, as described above, into the terminal block, with a subsequent connection of the wires to the corresponding contact elements. This requires an expensive and cumbersome tool which, due to the high crimping forces, is either pneumatically driven or externally powered. This significantly reduces the flexibility and versatility of the system. Accordingly, it is the object of the invention to provide a connector for the connection of at least one set of wire pairs to be connected to each other, which provides a higher degree of flexibility with respect to circuit modifications and, in particular, does not require the use of complex and expensive tools.

### SUMMARY OF THE INVENTION

The present invention provides an electrical connector for the connection of at least one set of wire pairs to be connected to each other and offers a solution to the above mentioned problem according to the characterising part of Claim 1.

The essence of the invention is that the terminal block for a permanent connection of wires and in particular feeder wire pairs, is replaced by a base which is provided with means for the releasable mounting and supporting of at least one plug. On this base a first plug for a first wire pair of the set of wire pairs is mounted, and at least a second plug for a second wire pair of the set of wire pairs, is releasably mounted onto the first plug. The contact elements within the at least two plugs are being formed and arranged within their respective bodies, so that an electrical contact is established between the wires of the first wire pair and the respective wires of the second wire pair, when mounting the second plug onto the first plug. The wires of the wire pairs can easily be connected to the respective plugs in a known manner. This is typically achieved either manually, or through the use of a simple hand tool. While the terminal blocks of the known solutions always include means for the permanent connection of wires, the base according to the invention has the primary purpose to support at least one pair of plugs which are mounted on top of each other. The basic advantage of using a relatively simple base onto which plugs are mounted is that, unlike with terminal blocks, no sophisticated and expensive tool is needed for the assembly. Furthermore, the connections can no longer be considered to be permanent with respect to the feeder wires. The fact that the first plug is releasably mounted onto the base, leads to an unexpected variety of features which so far have not been available through the use of terminal blocks. This will be explained in more detail below.
As mentioned above in this invention a plug is defined in a more general sense, namely having an insulative body and contact elements supported in the body, whereby these contact elements have a first portion for the connection to the respective wire pair and a second portion for the connection to another contact element which is located in another component of the connector, typically another plug. This means that a plug according to this definition can also be a receptacle. The first plugs which are mounted onto the base, have to provide means for the connection of the respective wire pair and other means that allow to mount a second plug onto the first one which, therefore, has the typical function of a receptacle.

In the most general sense the base needs only to have a single position for the mounting of a first plug onto which a second plug is mounted. This, however, is not the preferred embodiment for a cross connect system. However, such a configuration with a single position base and at least two plugs mounted thereon, can be a helpful addition to the typical cross connect system. In some instances, there may be the need to connect two wire pairs to each other which for some reason would have to be separated from the typical arrangement of e.g., ten wire pairs in a module. This may be advantagous under specific circumstances, such as the case that the corresponding wire pairs are too short to be guided to their respective modules or that an intermediate non-permanent connection has to be established.

The typical configuration however, is a base which is elongated and which at a multiplicity of positions which are adjacent to each other, is provided with means for supporting a multiplicity of plugs. In a situation in which a high number of wire pairs have to be connected to each other, all the positions of the base are used with typically a first plug and a second plug in every position. For example, the most common case is to use bases that have ten positions onto which then ten first plugs are mounted, connected to ten pairs of feeder wires. Subsequently, a set of ten second plugs which are connected to ten pairs of jumper wires are mounted onto the first plugs. The system however, also allows a large variety of other configurations. It might be advantagous and desirable to only place plugs onto a fraction of the multiplicity of the positions in the base. This can be desirable if the option should be kept open to leave space for the future addition of the feeder wire pairs.

Normally, as described above, plugs are placed in pairs onto the base, however, for a number of reasons it is possible to add other plugs on top of the pairs of plugs. This may be needed for the so called half-tapping in which an additional connection is made to a second telephone set. Another possibility is that for whatever reason, it may be desirable over a longer period of time to have a more permanent connection to a testing device.

It may also be desirable at some positions in the base to mount only a single plug onto which a pair of feeder wires is connected. This may be of interest if, for some reason, a pair of feeder wires coming from the central office is already in place without the need to establish a connection to an end user. In this case the wire pair is in a defined position and the connection can easily be made at a later point in time.

It is further advantagous to place a protective cover over the uppermost plugs mounted onto the base. This is well known and also applicable to the system according to the invention

As described above, the first plug may have the form of a receptacle onto which a second plug is placed. However, it is more advantagous to use only one type of plugs. In this case, the plugs preferably should be designed so that the contact elements with their second portions are projecting from the portion of the insulating body of the plug, which directly, or indirectly faces the base. The opposite end portion of the insulating body is provided with openings so that it allows the reception of the corresponding projecting contact element portions of another plug. Furthermore, the means in the base for the supporting of the plug, are provided with a cavity into which, upon the mounting of the plug onto the base, the projecting ends of the contact element enters. For various reasons,, these cavities are filled with a sealant. This sealant can be a grease, a gel, or the like, e.g., a two component silicone composition. The use of sealants is well known and also applicable to the connector according to the invention. It provides a protection to the projecting second portions of the contact elements, so upon a later removal of the first plug from the base, contacts to other plugs can easily be established. This is of significance as the system offers to take a first plug originally fitted with feeder wires and mount it on top of any other plug located on the same or another base. This shows that an excessive number of variations is possible with this modular system (some specific examples will be given below).

For some reason it is advantagous that the array of first plugs on the base, should also be treated in the conventional manner namely as a terminal block. Here, as mentioned above the advantage of avoiding the use of a complex tool is still valid. However, it might be desirable to have the first plugs in a fairly stable position, so that second plugs can be removed from the first plugs without removing the first plugs from the base. This can be achieved by chosing the tolerances of the means in the base, and the tolerances in the insulative bodies of the plugs, so that the force needed to remove a second plug from a first plug is smaller than the force needed to remove the first plug from the base. This is in line with the typical requirements for tolerances and, therefore, can be achieved without any additional cost.

As explained above, plugs have been defined in a relatively general manner, namely having means for the connection of a wire pair and portions of the contact element which can engage with other contact elements in other components of the connector. The connection of the wires onto the first portions of the contact elements can be established through a variety of means, such as the use of minature screws, crimping, wire wrapping, miniature flame soldering. The most preferred approach, however, is the use of insulation displacement features where the insulation of the wires is displaced during its insertion into the plug. Insulation displacement features are also known in a large variety. Metal elements with teeth can be pushed onto the wires thus penetrating the insulation or pins would be pushed through the insulation. In the most preferred and most common case, so called U-elements are used, which are simple metal plates provided with a slot with two sides of the slot designed so that, upon the insertion, these two sides are slightly deflected establishing a permanent contact.

The second portion of the contact elements in the plug is supposed to establish a contact with another contact element in another component of the connector. This also can be shaped in a large variety of manners. For instance, it is possible to give the second portions of the contact elements, the form of a pin and the corresponding portion in the other component of the connector the form of the receptacle in the form of a cylinder into which the pin can be inserted. Another possibility would be to use bendable end portions which slide onto corresponding flat areas in the other contact element located in the other component of the connector. The more preferred approach is to give the second portion of the contact element the form of a tuning fork which, upon insertion, engages with the side portion of the respective insulation displacing contact element in the other component. The advantage of this approach is that through this means the contact elements are given a particularly simple design which is advantagous with respect to the manufacturing cost.

In another preferred embodiment of the invention, the plugs are provided with a hinged cap which is supported on one end and which can be opened for the insertion of the respective wires. These wires are placed into apertures and the upper portions of the contact elements have insulation displacing features. These contact elements are arranged with respect to the hinged cap so that upon closing the cap onto the plug, the electrical contact between the inserted wires, and the insulation displacing contact portion is effected (further details of this approach can be taken from the patent US 5,178,558).

Frequently, it is desirable to provide means for the over-voltage protection of the system. This is well known and for example described in the patent US 5,281,163. This system is also applicable to the present invention. In this case, at least the first plugs are provided with means for an electrical protection. These can, for example, be voltage limiting elements, such as diac or trigger diodes, which are normally insulative but short across if the voltage exceeds a predetermined amount such as 270 volts. These means for the over-voltage protection are on one side connected to the contact elements, and on the other side to an externally accessible contact element which is arranged in the outer portion of the insulative body of the plug. Furthermore, the base can be directly or indirectly provided with a grounding element which is electrically connected to ground and onto which upon the mounting of the plug, an electrical contact is established between the externally accessible contact elements of the plug and the grounding element which, for instance, can have the form of a bar which is provided with a multiplicity of prongs into which the above mentioned externally accessible contact elements of the plug interract. The grounding of these bars is then achieved in the usual manner.

Similar to the known terminal blocks, also the base can be provided with means that allow the attachment of it to a support frame. Most preferably, for elongated bases these means are arranged at the ends of the base which then is mounted in the same manner as known terminal blocks.

Finally it is advantageous to provide the front portion of the base with means for the guidance and the fixing of the wire pairs. Some formations could be applied to the longitudinal side of the base to which the wire pairs have to be guided to. These formations can be hooks or small slots between adjacent projecting portions. The wires can then be brought into the corresponding free spaces in which they are held in place. This avoids an uncontrollable disarray of all the wire pairs.

### DESCRIPTION OF THE DRAWINGS

The invention will be more fully understood with reference to the accompanying drawings, wherein
- Fig. 1: is a perspective view of the connector including the base, a first plug and a second plug;
- Fig. 2: is a perspective view of the connector having the first and the second plugs mounted onto every position of the base;
- Fig. 3: is a perspective view of the connector with the base fitted with a varying number of plugs at only three positions;
- Fig. 4: is a perspective view of a connector with a base having only a single position onto which a first and a second plug are mounted;
- Fig. 5: being a perspective view of the base only;
- Fig. 6: giving a view from the top onto the base;
- Fig. 7: giving a view from the bottom onto the base;
- Fig. 8: giving a side cross-sectional view through the base at the location marked with A-A in Fig 6;
- Fig. 9: showing a portion of the base provided with wire holding and guiding means;
- Fig. 10: showing another embodiment of the base fitted with plugs and provided with a grounding bar for the overvoltage protection of the plugs.
- Fig.11: giving a perspective view of a single plug viewing at the end portion of the insulating body which directly or indirectly is facing the base;
- Fig.12: giving a perspective view of the plug viewed from the opposite end portion with the hinged cap opened;
- Fig.13: giving a cross-sectional view through the plug;
- Fig.14: giving a perspective and exploded view on a pair of contact elements with additional elements providing electrical protection.
- Fig.15: giving a perspective view of two sets of metal contact elements of the first and second plug; and
- Fig.16: giving a cross-sectional view through the connector at the plane of the fork portion of contact elements showing the base, a first plug, a second plug, and a protective cover.

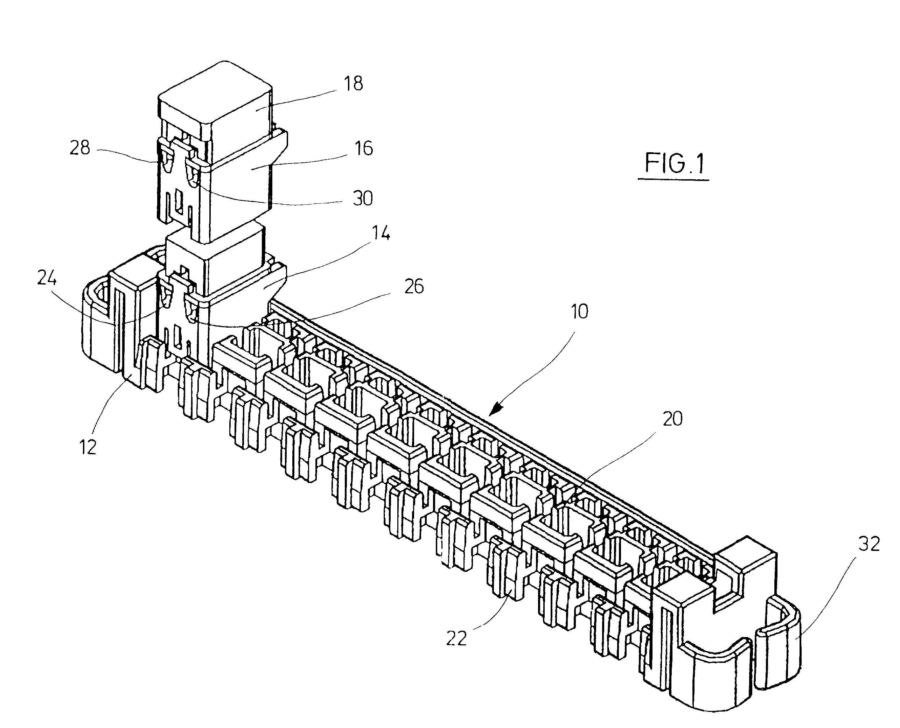

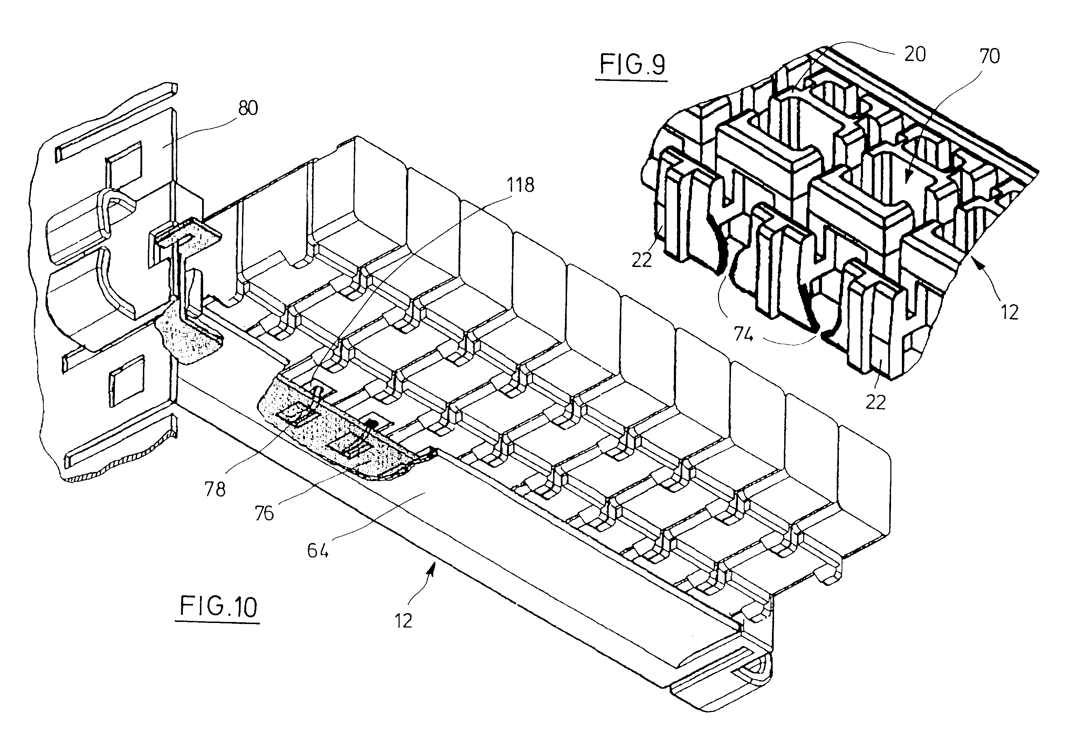

The essentials of the invention are depicted in Figs. 1 through 8, and Fig. 16, while further details of the plugs are shown in Figs. 9 through 15. Details of the plugs are only referred to whenever necessary in view of this invention. Further aspects related to the plugs can be taken from the patents US 5,178,558 and US 5,281,163.

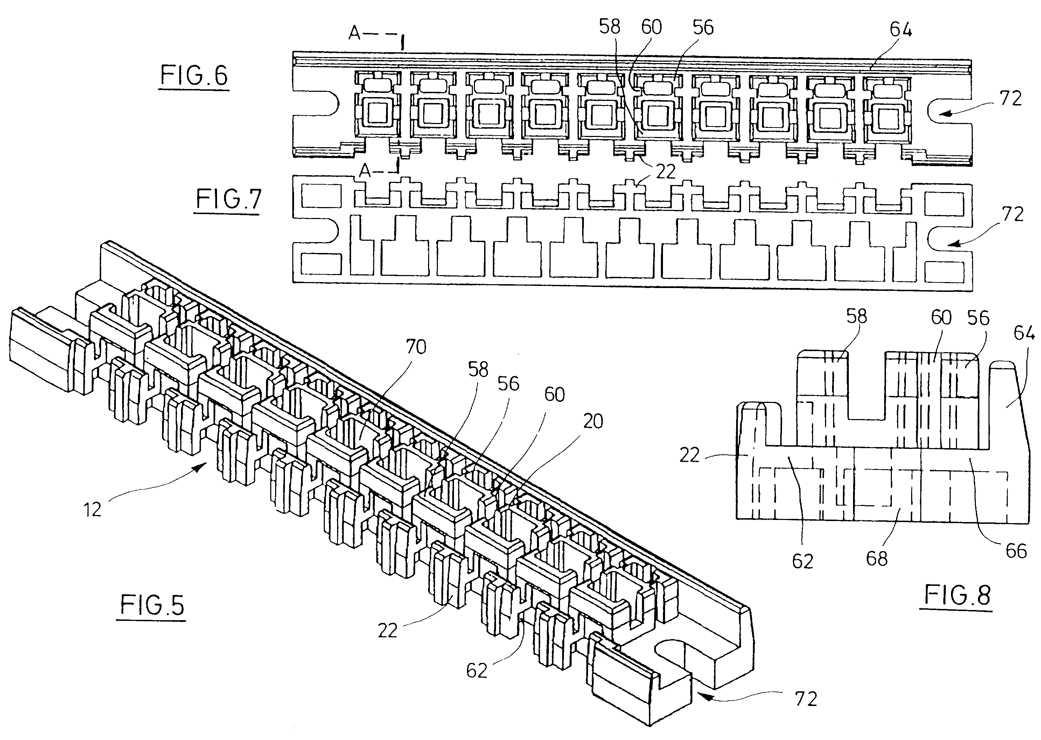

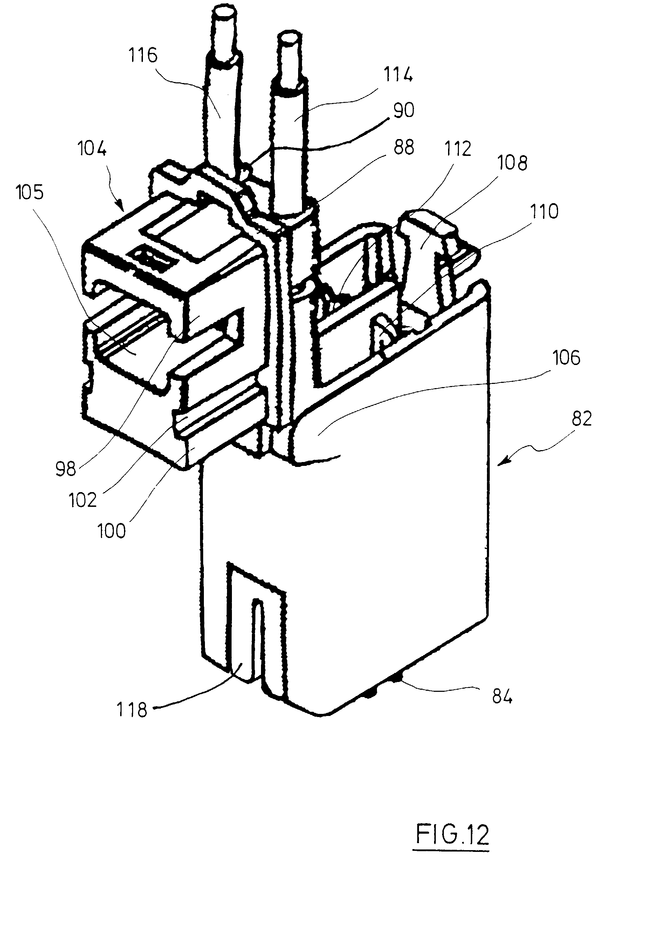

Fig.1 shows a connector 10 having a base 12 onto which, in the first position of the base 12 a first plug 14 is mounted. A second plug 16 is shown which is intended to be mounted on top of the first plug 14. The second plug 16 is covered with a protective cap 18. The base 12 has an elongated configuration with a multiplicity of positions that allow the mounting of the plugs. Walls are formed in the body of the base giving a configuration 20 with U-shaped walls corresponding to the inner part of the end portion of the insulating body of the first plug 14 which faces the base. The configuration 20, together with the projecting adjacent configuration 22, ensures that in conjunction with the formation of the corresponding end portion of the first plug 14 the plug itself can easily be mounted onto the base. This does not require an undue force and can typically be done by hand. An additional tool is not necessary. The second plug 16 is shown in a position immediately prior to its mounting onto the first plug 14. The plugs have apertures 24, 26, 28 and 30 respectively into which the wires of the wire pairs (not shown) will be inserted (this will be referred to in more detail in connection with the description of Fig. 12). Base 12 is preferably moulded using known molding techniques as a single piece and has an elongated configuration as shown with latches 32 which allow the mounting of the entire base onto a support frame. These latches 32 have the form of curved arms leaving a free space between them and the adjacent side wall. With these provisions the entire base 12 can be mounted on e.g., two bars of a support frame (not shown). Another solution for the mounting of base 12 will be referred to in connection with Fig. 5.

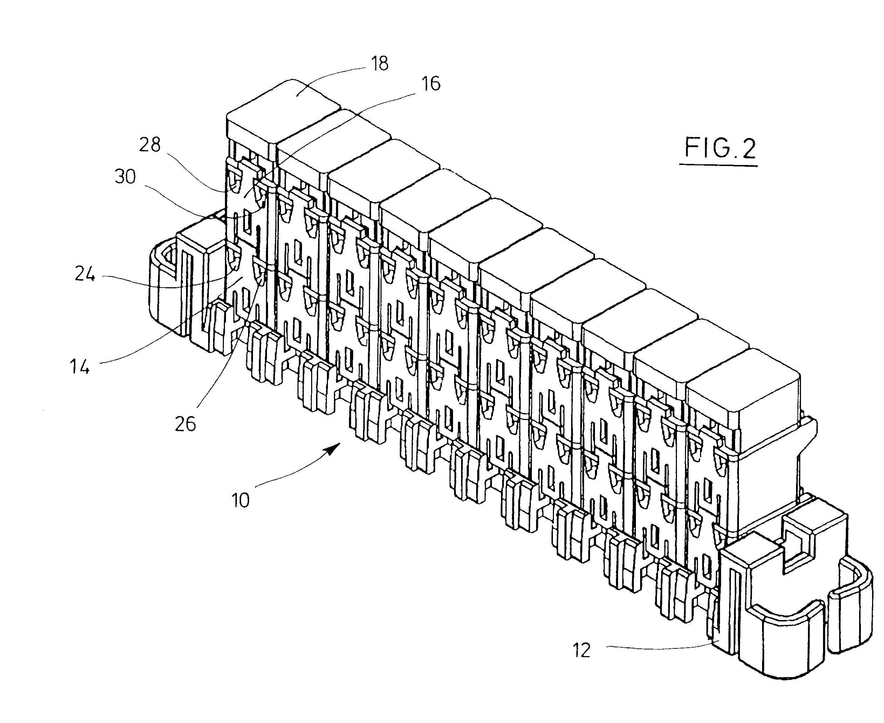

Fig. 2 shows a connector 10 with the base 12 onto which first plugs 14 and second plugs 16 provided with protective caps 18 are mounted onto every position of the base. In practical applications, the apertures 24, 26, 28, and 30 of all plugs will typically be provided, and connected, with pairs of wires. This means that the connector according to Fig. 2 would be connected to ten pairs of feeder wires mounted onto the first plugs 14, while the second plugs 16 will be connected with up to ten pairs of jumper wires. These wires are left out for the sake of simplicity and are only shown in Fig. 12.

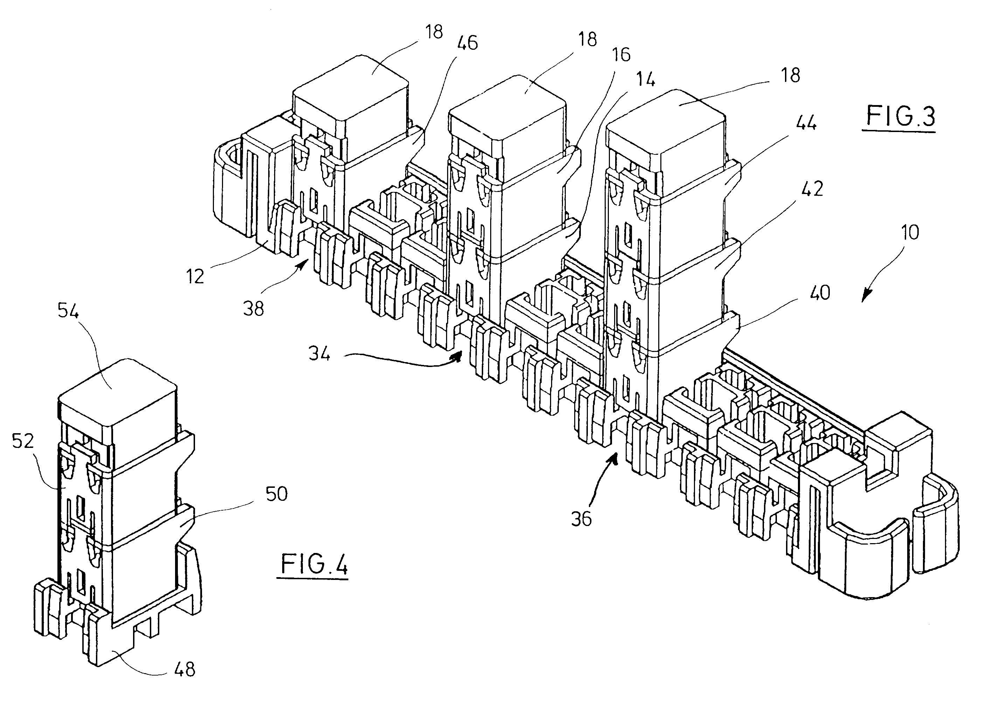

The configuration as shown in Fig. 2 will be the standard one filling all positions with pairs of plugs. However, the system would also allow a whole variety of other configurations, some of them being shown in Fig. 3. Base 12 is provided with plug assemblies on each of the three positions, 34, 36 and 38 respectively. On position 34 which is actually the fourth one in the base 12 a configuration is shown which is considered to be the normal one as already depicted in Figure 2. A first plug 14 is mounted onto the base 12. A second plug 16 with a protective cap 18 is mounted on top of this, and under normal conditions, wires are inserted into the apertures 24, 26, 28, and 30, and connected to the plugs. This is the standard configuration where the feeder wires have been connected to the first plug 14 in the apertures 24 and 26, and the corresponding jumper wires have been connected to the second plug 16 through the apertures 28 and 30 (see Fig. 2). In position 36, which is the seventh position on the base 12 three plugs 40, 42 and 44 are mounted on top of each other, allowing a connection of a total of three pairs of wires. As described above, this can be done in order to obtain a half-tapping, a permanent testing or other connections. In these cases the corresponding third wire pair is connected to the third plug 44 which, after removal of cap 18 is mounted onto plug 42. Finally cap 18 is placed onto plug 44. As another example, a single plug is mounted onto the first position 38 of the base 12. This may be of importance for some applications in which a connection between two or more pairs of wires is only desired at a later point in time. It may eventually be advisable to only establish a connection to the connector from the central office, which means that the corresponding wire pair is connected onto the plug 46 so that at any later date it would be possible to mount a second (or eventually an additional third) plug onto plug 46 to finally establish a desired connection.

For such a connection at a later point in time, for example, the necessity may come up to remove the jumper pair at plug 16 from the feeder wire pair in plug 14, and establish a connection with the feeder pair in plug 46. The most simple approach would be to remove cap 18 from the top of plug 46 and remove plug 16 from plug 14 and mount it directly together with its corresponding cap 18 onto plug 46. The remaining cap 18 can then be placed on top of plug 14. In this case, an exchange between position 34 and 38 is obtained and the feeder pair in plug 14 would be without any connection.

It would also be possible to modify the connection without an interruption of the circuit, which is particularly desirable if the related circuitry belongs to a data transmission line. In this case the following approach could be taken (not shown in the figures): A short wire pair is connected at both ends to a plug to obtain a configuration similar to an extension cord, however, with a pair of equal plugs. Then the assembly of plug 14 and plug 16 are jointly removed from the base 12. Furthermore, cap 18 is removed from plug 16. Plugs 14 and 16 (without being disconnected) are mounted onto one of the pair of plugs which have been connected with the short wire pair. The second plug of the pair is mounted on top of plug 16, so that a pile of four plugs is obtained, being separated from base 12 and for example, held by hand. Then this pile of four plugs is separated in the middle, so that plug 14 is placed on one of the pair of plugs and 16 on the other one, both of them still being connected with the short wire pair. Accordingly, the circuitry is not disconnected.

Subsequently, plug 16 and the additional plug on top of it, are placed onto plug 46, after the removal of the corresponding cap 18, so that at position 38, a pile of three plugs is obtained. Now, the jumper wires of plug 16 are connected to both of the feeder wires of plug 14 as well as of the feeder wires of plug 46. Finally, the plug on top of the stack of the three plugs in position 38 is removed and the cap 18 is attached. Now only a connection is left between the feeder wires of plug 46 and the jumper wires of plug 16. Plug 14, then for example, is removed from the other plug of the pair and is placed back in its original position and covered with the left over cap 18, so that at the end the pair of plugs connected to each other with a wire pair are available for other similar operations.

Another alternative to change connections without circuit interruption is the following: As before, the pile of four plugs held by hand is created. Then they are also separated in the middle. Subsequently a fifth plug is mounted onto plug 14, this plug being connected with a wire pair belonging to a new end user. Then the plug below plug 14 is removed and the remaining pair consisting of plug 14 and the fifth plug are mounted onto a new position on base 12. Finally, a cap 18 is placed onto the fifth plug. The old distribution with plug 16 can e.g., be placed back to position 34. Now the feeder wire pair on plug 14 is connected to a new user line and a circuit interruption has been avoided.

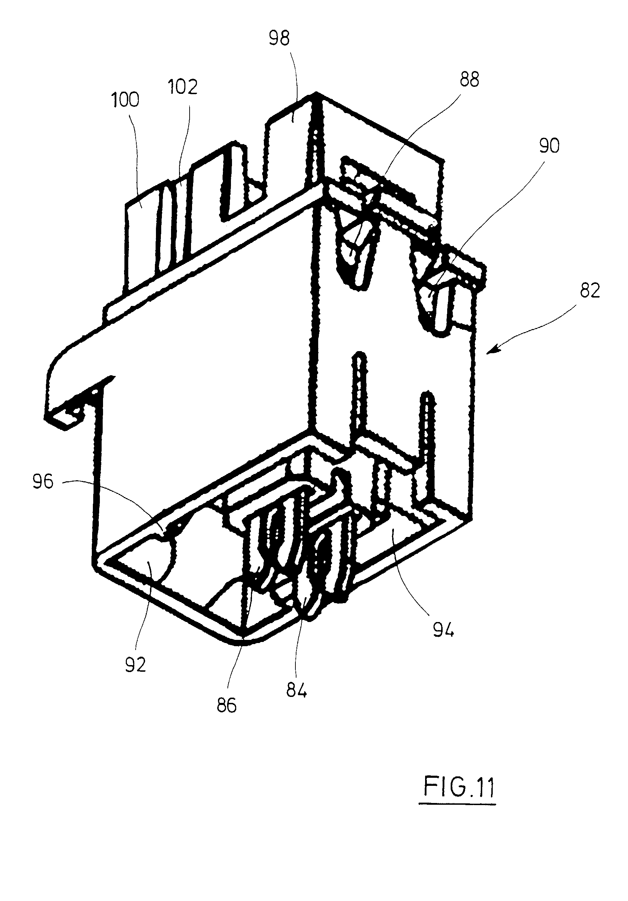

Similar approaches are shown in the patent US 5,178,558 Fig. 11. The basic difference is that the feeder wires are no longer permanently installed. The following configuration would not be possible with the system described in patent US 5,178,558, the above described procedure would also be possible when starting with the connection on position 34 only, and establishing a completely new connection of feeder wires to position 38. These examples demonstrate the versatility of the system.

Fig. 4 shows an alternative configuration for the base. Typically the base is supposed to be fitted with a number of plugs for the establishment of, e.g., 10 connections. Other counts can be thought of as e.g., 5 or 20, or under very specific circumstances, just a single count.

This is depicted in detail in Fig. 4 where the base 48 has just a single position without any means for the attachment to a support frame. A first plug 50 is mounted onto the base 48 and a second plug 52 covered with a protective cap 54 is mounted onto the first plug 50. This allows a connection to be made between just two pairs of wires. The simple advantage of this approach can be, that under some circumstances it is necessary to establish a connection between two wire pairs only, independent from the arrangement of other wire pairs. Then this could be established according to the system shown in Fig. 4. It allows the use of the same type of plugs for this individual connection by simply utilising a specific shortened version of the base, namely the configuration 48. With the existing systems, a separate and differently designed connector for two wire pairs would be necessary.

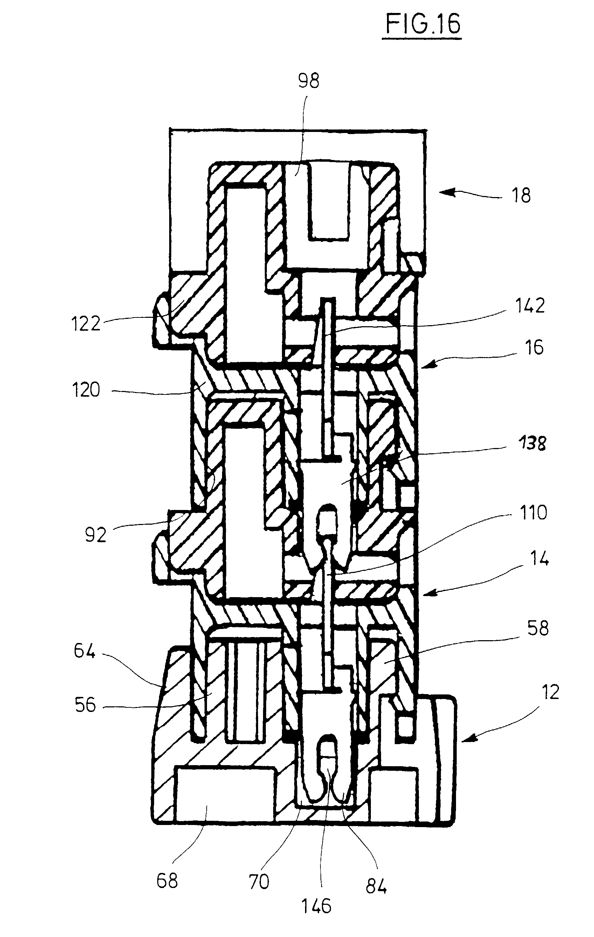

Figs. 5 through 8 show the base, 12, in more detail. This base 12 is a single piece component typically obtained through a moulding process. It has specific configurations at ten different positions, allowing the mounting of up to ten plugs 14. In the configuration 20, an essentially rectangular arrangement can be seen onto which an additional part 22 is projecting therefrom. The rectangular configuration consists of essentially two distinctive arrays of U-shaped walls 56 and 58 where, between them, a slot 60 is left on both sides. The projecting portions 22 are connected to the rectangular configuration 20 through bridge portion 62. A continuous wall 64 is arranged behind the rectangular wall configurations 20. Fig. 6 shows the view from the top - the side onto which the plugs are mounted - Fig. 7 shows the bottom configuration. Fig. 8 shows a cross-sectional view along the line A-A of Fig. 6. This cross-sectional view demonstrates that the base has a ground plate, 66, which is extending throughout the entire base, except for the front portions 22. The rectangular configurations 20 with the details 56, 58 and 60 are projecting from this base plate and allow the mounting of the plugs with the corresponding internal configurations at their end portions facing the base. Below the base plate 66 a free space 68 is left to obtain sufficient stability of the base by simultanously maintaining a more or less constant thickness of all walls which is necessary to facilitate a moulding process. Furthermore, in the configurations 58 a cavity 70 is left filled with grease (e.g., EG3 supplied by the Minnesota Mining & Manufacturing Company). This will be referred to below (see Fig. 16). Finally, means for the mounting of the base 12 are shown in Figs. 5, 6, and 7, which differ from those shown in Figs. 1, 2 and 3. In this case, openings are shown in the form of a slot with a semi-cylindric end portion, which can be used in order to screw the base onto a support frame of some type.

Fig. 9 shows a portion of base 12 where the end projections 22 are formed in such a way that wire holding or guidance features are obtained. The front portions, which may have different shapes, are leaving only relatively narrow slots 74 through which individual wires can be passed. These wires are captured in the space between two adjacent projections 22.

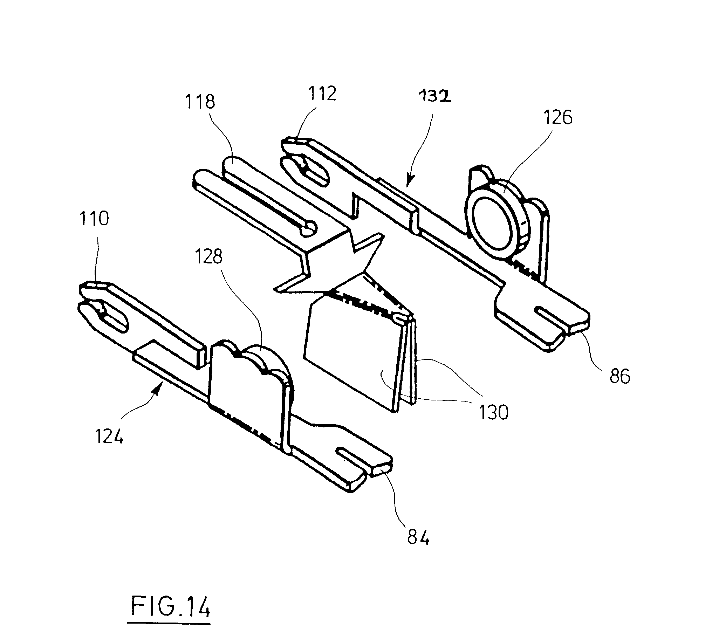

Fig. 10 shows another embodiment of the base 12 where the wall 64 has an embedded grounding bar 76 from which, at every position of the base 12, a prong 78 is projecting. These prongs are supposed to interact with a plug having over-voltage protection, which will be discussed in more detail in connection with Fig. 14. Bar 76 is mechanically and electrically connected to another bar 80 which is connected to ground and is in a perpendicular arrangement with respect to the base 12. With this configuration the gound connection to protected plugs can be achieved.

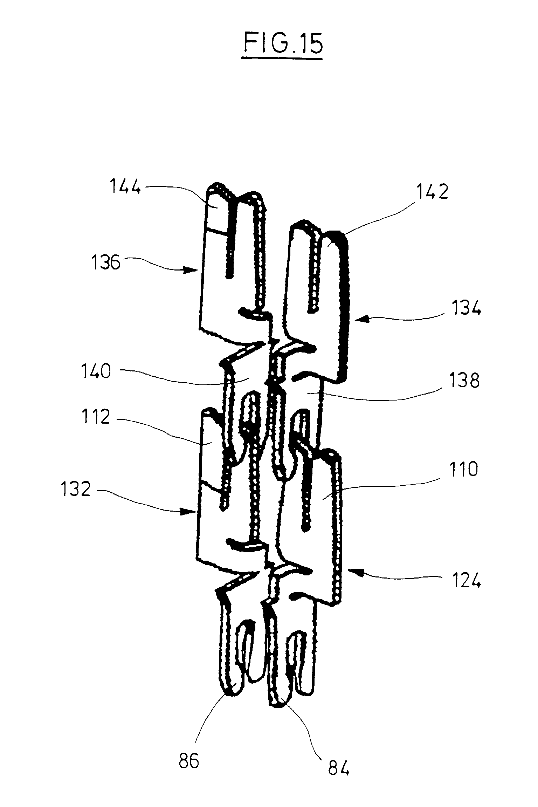

Fig. 11 shows a plug 82 (corresponding to plugs 14, 16, 40. 42. 44. 46. 50, 52 in Fig. 1 - 4) from the outside. The plug is seen in a perspective view from the end portion of the insulating body of the plug, which directly or indirectly faces the base 12. It shows the end portions 84 and 86 of the metal contact elements projecting from the insulating body of the plug 82. On the upper side the apertures 88 and 90 for the insertion of the wire can be seen. The end portion of plug 82 has walls forming an essentially rectangular configuration. The inner portions 92 and 94 of which, together with the longitudinal protrusion 96, match the corresponding configurations on the base 12 of Figs. 5 and 6, having the configurations 56 and 58 and the slot 60. When mounting the plug 82 onto the base 12 the inner portions of the walls of the plug 82 indicated with 92 and 94 engage with the external portions of the walls 56 and 58 of the base 12, while the longitudinal protrusion 96 of the plug 82 passes into the slot 60 of the base 12. On the upperside of the plug 82, as shown in Fig. 11, configurations 98, 100 and 102 are shown which are identical to the formations in the base 12 identified by 56, 58, and 60. This means that there is an essentially rectangular configuration 98 and another similar configuration 100 adjacent to it, having the slot 102 between them. This design allows another plug to engage with plug 82 so that the inner portions 92 and 94, and the longitudinal protrusion 96 of the second plug, would engage with the outer portions of the walls 98 and 100 and the slot 102 of the first plug, thus rendering the plugs stackable on top of each other (the fork portions 84 and 86 of the contact elements of one plug will engage with the corresponding portions of the other plug, which will be referred to in Figs. 15 and 16. The tolerances for formations 56, 58 and 60 on the base 12 and 92, 94, 96, 98, 100 and 102 on the plugs are chosen so that the force to remove a plug 16 from another plug 14 is smaller than the force necessary for the removal of a plug 14 from the base 12.

Fig. 12 shows the plug 82 in a perspective manner from the top. The fork portion 84 of the end of the contact element can be slightly seen. The apertures 88 and 90 for the insertion of the wires of the wire pair, as well as the above described rectangular configurations 98 and 100 and the slot in between them 102 can be seen, all of them belonging to a hinged cap 104. Configuration 98 has a rectangular opening and in the bottom two slots (not shown) allowing the insertion of fork portions 84 and 86 when mounting another plug onto plug 82. Cap 104 is rotated around the axis 106 and can be removed from the main body of the plug 82 typically through the use of a simple hand tool. Normally the hinged cap 104 is held in place through the protruding portion 108 onto which the hinged cap 104 is snapped on. The tool allows the movement of the end of the hinged cap 104 over these protruded portions. Inside the body of the plug 82 the upper portions of the contact elements can be seen, having the form of insulation displacing contact portions 110 and 112. For the insertion and connection of the wires, the following procedure is necessary. The two wires 114 and 116 of the wire pair, are inserted into the apertures 88 and 90.

Then the hinged cap 104 is moved back into its original position until it snaps over the protruded portion 108. With this movement the insulation displacement portions 110 and 112 of the metal contact elements, penetrate through the insulation of the wires 114 and 116 thus establishing a permanent contact in a well-known manner. This can typically be done manually. It may eventually be necessary to place the protective cap 18 (not shown) over the upper portion of the hinged cap which then covers the wall configuration 98 and 100 and the slot 102. On the side of plug 82 a slotted portion 118 of a metal component can be seen which will be explained in connection with Fig. 14.

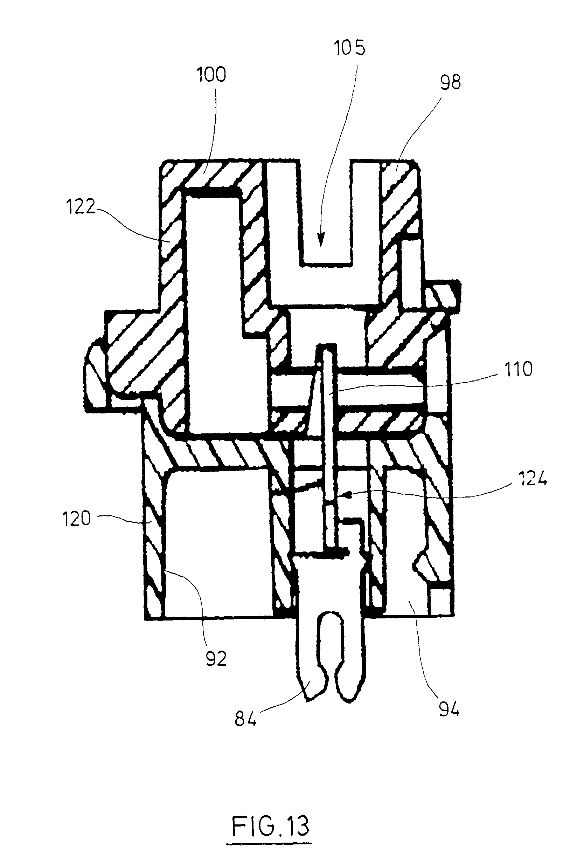

Fig. 13 can be best understood in conjunction with Figs. 11 and 12, which specifically show that the metal contact element consists of a tuning forked-type portion 84 projecting from the end of the plug, and an upper portion 110 which has the form of an insulation displacement element. It can be seen that the two portions of the contact element are rotated with respect to each other at an angle of 90°. Furthermore, opening 105 can be seen so that plug 82 can receive the projecting contact portions of another plug mounted on top of plug 82. Finally, it can be seen that the plug 82 essentially is made up of four components, namely a lower part of the insulative body 120 plus an upper part of the insulative body 122 and the two contact elements, one of them 124 being visable in this cross-sectional view. For the assembly, the contact elements 124 are placed into the portion of the insulative body 120 and subsequently, the upper portion 122 is moved over the lower portion 120 until the two parts snap together. This is, however, only of secondary importance in view of this invention.
Fig. 14 shows a specific configuration for the electrical protection of the plug. In this special configuration the metal contact elements 124 are shown with their insulation displacement contact portions 84, 86 and tuning fork portions 110, 112. An additional metal strip is integrally connected to the insulation displacement contact portion 84, 86 and bent over at an angle of 90°. Directly connected are voltage-limiting elements 126, 128. These are preferably diac or trigger diodes which are normally insulative but effect a short circuit across their flat sides if the voltage exceeds a predetermined amount such as 270 volts. Fig. 14 shows the configuration in an exploded view between the two metal contact elements 124. A ground contact is arranged having an external contact portion 118 which also is visible on Fig. 12 being in line with the outer wall of plug 82. This external contact is integrally connected to two plates 130, which are formed as shown. After the assembly, plates 130 get in direct contact with the voltage-limiting elements 126, 128. The over-voltage protection is achieved when inserting a plug with this configuration into the base 12, the principle being visible in figure 10. The outer contact 118 engages with prongs 78 of bar 76 which, through the second bar 80, is connected to ground level. Accordingly, plugs which are inserted on the base 12 of Fig. 10 are grounded in contact portions 118 and 130 so that the over-voltage protection is operational.

Fig. 15 more distinctively shows in which way the metal contact elements of two adjacent plugs engage with each other. The contact elements 124 and 132 can e.g., be considered as the contact elements belonging to a first plug 14 to be mounted onto the base 12. They have the tuning fork portion 84 and 86, and the insulation displacement contact portions 110 and 112. As explained above, wires 114 and 116 are moved during the connection into the slots of the insulation displacement contact portions 110 and 112. When placing the first plug onto the base, the projecting tuning fork portions 84 and 86 move into the cavities 70 (see Fig. 5), which provide the necessary protection (it is favourable to fill this cavity 70 with grease). When placing the second plug onto the first plug, with contact elements 134 and 136 their tuning fork portions 138 and 140 projecting from the lower end of the insulating body of the second plug, enter into the respective opening 105 of the first plug and engage with the side of the insulation displacement contact portions 110 and 112, of the first plug. When applying a third plug, the same type of connection is made. It can be seen that the tuning fork portions 84, 86 or 138 and 140, are rotated with respect to the corresponding insulation displacement portions 110, 112, 142 and 144 respectively. Furthermore, it can be seen that the pairs of contact elements 124, 132, 134, 136 respectively, are identical in shape although rotated at an angle of 180° with respect to each other.

With these figures in mind, it now can be better understood in which way the configurations shown in Figs. 1 through 4 operate. This can be seen when taking a cross-sectional view through the base, a first plug and a second plug, at the location of the tuning fork portions 84 or 86 of the contact elements 124 or 132. This is shown in Fig. 16, showing the base 12 a first plug 14 a second plug 16 and a protective cover 18. The fork portion 84 of plug 14 is entering the cavity 70 which, in portion 146, is filled with grease. This cross-sectional view can be best understood when comparing it in detail with the figures 5, 6, 11, 13, and 15 in which the same designations have been used.

## Claims

1. An electrical connector for the connection of at least one feeder wire pair with at least one jumper wire pair, comprising
- a base member (12) of insulation material having a plurality of mounting positions (34, 36, 38),
- at least one first plug (14) having a body of insulative material which is adapted to be releasably mounted to the base member at least at one of the mounting positions,
- at least one second plug (16) having a body of insulative material which is adapted to be releasably mounted on the top of the first plug, with the plugs forming a stack,
- a pair of metal contact elements within each of the plugs, the contact elements having a first portion for the connection of a said pair of wires and a second portion for the connection to the contact element of an adjacent plug in a stack,
characterized in that
the base member (10) is a one piece part and whose only purpose is to provide support means for the at least one first plug (14) such that said feeder wire pair is to be connected to the at least one first or second plug (14, 16) of a stack and said jumper wire pair is to be connected to the at least one second or first plug of the stack (16, 14), respectively.

2. An electrical connector according to claim 1, characterized in that the base (12) is elongated.

3. An electrical connector according to claim 1 or claim 2, characterized in that at least in one position of the base member (12), at least a third plug (44) is mounted onto the second plug (42).

4. An electrical connector according to claims 1 to 3, characterized in that at least in one of the positions (38) of the base member (12) a single plug is mounted.

5. An electrical connector for the connection of at least one feeder wire pair with at least one jumper wire pair, comprising
- a base member (48) of insulation material having at least one mounting postion (34, 36, 38),
- at least one first plug (50) having a body of insulative material which is adapted to be releasably mounted to the base member at the at least one mounting position,
- at least one second plug (52) having a body of insulative material which is adapted to be releasably mounted on the top of the first plug, with the plugs forming a stack,
- a pair of metal contact elements within each of the plugs, the contact elements having a first portion for the connection of a pair of wires and a second portion for the connection to the contact elementof an adjacent plug,
characterized in that
the base member (48) is a one piece part and whose only purpose is to provide a support means for the first plug (50) such that said feeder wire pair is to be connected to the at least one first or the second plug (50, 52) of the stack and said jumper wire pair is to be connected to at least one second or first plug (52, 50) of the stack, respectively.

6. An electrical connector according to any one of claims 1 to 5, characterized in that a protective cover (18, 54) is provided to be placed on at least one of the uppermost plug (16, 44, 46, 52) of the stack.

7. An electrical connector according to any one of claims 1 to 6, characterized in that
- the plugs (14, 16, 50, 52) are identical in shape,
- the second contact portions (84, 86; 138, 140) of the contact elements (124, 132; 134, 136) to establish contact with contact elements located in another component of the connector, project beyond the end portion (92, 94, 96) of the insulating body, directly or indirectly facing the base (12), the opposite end portion (98, 100, 102) of the insulating body being provided with openings (105) allowing to receive the projecting contact portions of another plug placed above and
- means (20, 22) in the base member (12) are provided at the positions having a cavity (70) that, upon the mounting of the plug (14, 50) onto the base member (12), receives the projecting ends of the contact elements (124, 132).

8. An electrical connector according to claim 7, characterized in that the cavity (70) is filled with a sealant.

9. An electrical connector according to one of the claims 1 to 7, characterized in that the means (20, 22) of the base member (12) for the supporting of the plugs (14) and the dimensions of the end portions (92, 94, 96) of the insulating bodies of the plugs (14, 16, 82), designed from their mounting onto the base member (12), or the mounting onto another plug are, with respect to their tolerances, chosen in a manner that the force necessary for the removal of a plug (16) from another plug (14) is smaller than the force necessary for the removal of a plug (14) from the base member (12).

10. An electrical connector according to any one of claims 1 to 9, characterized in that the first portions (110, 112; 142, 144) of the metal contact elements (124, 132; 134, 136) of the plugs (14, 16, 40, 42, 44, 46, 50, 52, 82) are provided with insulation displacement features for the connection to the respective wires of the pairs.

11. An electrical connector according to claim 10, characterized in that the second portions (84, 86) 138, 140) of the contact elements (124, 132; 134, 136) in the plugs (14, 16, 40, 42, 46, 50, 52, 82) for the electrical connection with a contact element located in another plug, has the form of a tuning fork, which engages a side portion of the respective insulation displacing contact portion (110, 112; 142, 144) of the adjacent plug.

12. An electrical connector according to any one of claims 10 or 11, characterized in that the plugs (82) are provided with a cap (104) hinged on one end of the insulating body, the cap (104) having means for facilitating connections between the wire pair to be inserted into apertures (88, 90) of the cap (104) and the contact elements (110, 112), the cap (104) being arranged with respect to the insulating displacement contact portions (110, 112) so that upon closing the hinged cap (104) onto the insulating body of the plug (82), the electrical contact between the inserted wires (114, 116) and the insulation displacing contact portion (110, 112) is effected.

13. An electrical connector according to one of claims 1 to 12, characterized in that
- at least the first plug (82) is provided with means for an electrical protection (126, 128) connected to an externally accessible contact element (118) arranged in the outer portions of the insulative body of the plug (82) and
- a grounding element (76) is integrated into the base (12) or closely arranged thereto, so that upon mounting of the first plug (82) onto the base (12) an electrical contact between the externally accessible contact element (118) of the first plug (82) and the grounding element (76) is established.

14. An electrical connector according to any one of claims 1 to 13, characterized in that the base member (12) is provided with means (32, 72) allowing to attach the base member (12) to a support frame.

15. An electrical connector according to claims 1 to 14, characterized in that the base member (12) is provided with additional means (22, 74) for the guidance of at least a pair of wires to a plug on the base member and for fixing of said one pair of wires.

## Patentansprüche

1. Elektrischer Verbinder für die Verbindung von mindestens einem Paar Zuführungsdrähte mit mindestens einem Paar Schaltdrähte, mit
- einem Basisteil (12) aus isolierendem Material, das eine Mehrzahl von Anbringpositionen (34, 36, 38) aufweist,
- mindestens einem ersten Steckteil (14), das einen Körper aus Isoliermaterial aufweist und lösbar mit dem Basisteil an mindestens einer der Anbringpositionen verbindbar ist,
- mindestens einem zweiten Steckteil (16), das einen Körper aus isolierendem Material aufweist und das lösbar auf dem oberen Ende des ersten Steckteils anbringbar ist, wobei die Steckteile einen Stapel bilden,
- einem Paar metallischer Kontaktelemente in jedem der Steckteile, wobei die Kontaktelemente einen ersten Abschnitt für die Verbindung mit einem Paar der Drähte aufweisen und einen zweiten Abschnitt für die Verbindung mit den Kontaktelementen im benachbarten Steckteil in einem Stapel, dadurch gekennzeichnet, daß das Basisteil (10) ein einstückiges Teil ist, dessen einziger Zweck ist, ein Lagermittel für mindestens ein erstes Steckteil (14) zu bilden derart, daß das Paar Zuführungsdrähte mit dem mindestens einen ersten oder zweiten Steckteil (14, 16) eines Stapels und das Paar Schaltdrähte mit dem zweiten oder ersten Steckteil (16, 14) des Stapels zu verbinden ist.

2. Elektrischer Verbinder nach Anspruch 1, dadurch gekennzeichnet, daß das Basisteil (12) länglich ist.

3. Elektrischer Verbinder nach Anspruch 1 oder 2, dadurch gekennzeichnet, daß in mindestens einer Position des Basisteils (12) mindestens ein drittes Steckteil (44) auf dem zweiten Steckteil (42) angebracht ist.

4. Elektrischer Verbinder nach einem der Ansprüche 1 bis 3, dadurch gekennzeichnet, daß an mindestens einer der Positionen (38) des Basisteils (12) ein einziges Steckteil angebracht ist.

5. Elektrischer Verbinder für die Verbindung mindestens eines Paars von Zuführungsdrähten mit mindestens einem Paar von Schaltdrähten, mit
- einem Basisteil (48) aus isolierendem Material, das mindestens eine Anbringposition (34, 36, 38) aufweist
- mindestens einem ersten Steckteil (50), das einen Körper aus isolierendem Material aufweist und das an mindestens einer Anbringposition lösbar an dem Basisteil anbringbar ist,
- mindestens einem zweiten Steckteil (52), das einen Körper aus isolierendem Material aufweist und das auf der Oberseite des ersten Steckteils lösbar anbringbar ist, wobei die Steckteile einen Stapel bilden,
- einem Paar von metallischen Kontaktelementen in jedem der Steckteile, wobei die Kontaktelemente einen ersten Abschnitt aufweisen für die Verbindung mit einem Paar der Drähte und einen zweiten Abschnitt für die Verbindung mit dem Kontaktelement des benachbarten Steckteils,
dadurch gekennzeichnet,
daß das Basisteil (48) ein einteiliges Teil ist, dessen einziger Zweck darin besteht, ein Lagermittel für das erste Steckteil (50) zu bilden derart, daß das Paar Zuführungsdrähte mit mindestens einem ersten und einem zweiten Steckteil (50, 52) des Stapels und das Paar Schaltdrähte mit mindestens einem zweiten oder ersten Steckteil (52, 50) des Stapels zu verbinden ist.

6. Elektrischer Verbinder nach einem der Ansprüche 1 bis 5, dadurch gekennzeichnet, daß eine Schutzabdeckung (18, 54) auf mindestens ein oberstes Steckteil (16, 44, 46, 52) des Stapels aufgebracht wird.

7. Elektrischer Verbinder nach einem der Ansprüche 1 bis 6, dadurch gekennzeichnet, daß
- die Steckteile (14, 16, 50, 52) in der Form identisch sind,
- die zweiten Kontaktabschnitte (84, 86; 138, 140) der Kontaktelemente (124, 132; 134, 136) einen Kontakt mit Kontaktelementen bilden, die in einer anderen Komponente des Verbinders angeordnet sind, wobei die zweiten Kontaktabschnitte über den Endabschnitt (92, 94, 96) des isolierenden Körpers sich hinauserstrecken und direkt oder indirekt dem Basisteil (12) zugekehrt sind, wobei der gegenüberliegende Endabschnitt (98, 100, 102) des isolierenden Körpers mit Öffnungen (105) versehen ist, welche die vorstehenden Kontaktabschnitte eines anderen Steckteils aufnehmen, das darüber angeordnet ist und
- daß Mittel (20, 22) im Basisteil (12) an den Positionen vorgesehen sind, die einen Hohlraum (70) aufweisen, der bei der Anbringung des Steckteils auf den Basisteil (12) die hervorstehenden Enden der Kontaktelemente (124, 132) aufnimmt.

8. Elektrischer Verbinder nach Anspruch 1, dadurch gekennzeichnet, daß der Hohlraum (70) mit einem Dichtmittel gefüllt ist.

9. Elektrischer Verbinder nach einem der Ansprüche 1 bis 7, dadurch gekennzeichnet, daß die Mittel (20, 22) des Basisteils (12) für die Lagerung der Steckteile (14) und die Abmessungen der Endabschnitte (92, 94, 96) der isolierenden Körper der Steckteile (14, 16, 82), die zur Anbringung auf dem Basisteil (12) oder auf einem anderen Steckteil ausgelegt sind, im Hinblick auf ihre Toleranzen so gewählt sind, daß die Kraft, die erforderlich ist zum Entfernen eines Steckteils (16) vom anderen Steckteil (14) kleiner ist als die Kraft, die erforderlich ist, ein Steckteil (14) von dem Basisteil (12) zu lösen.

10. Elektrischer Verbinder nach einem der Ansprüche 1 bis 9, dadurch gekennzeichnet, daß die ersten Abschnitte (110, 112; 142, 144) der metallischen Kontaktelemente (124, 132; 134, 136) der Steckteile (14, 16, 40, 44, 46, 50, 52, 82) mit die Isolation verdrängenden Merkmalen versehen sind für die Verbindung mit den entsprechenden Drähten der Drahtpaare.

11. Elektrischer Verbinder nach Anspruch 10, dadurch gekennzeichnet, daß die zweiten Abschnitte (84, 86, 138, 140) der Kontaktelemente (124, 132, 134, 136) in den Steckteilen (14, 16, 40, 42, 46, 50, 52, 82) für die elektrische Verbindung mit einem im anderen Steckteil angeordneten Kontaktelement die Form einer Stimmgabel aufweisen, die mit einem Seitenabschnitt des entsprechenden Isolierung verdrängenden Kontaktabschnitts (110, 112, 142, 144) des benachbarten Steckteils in Eingriff sind.

12. Elektrischer Verbinder nach Anspruch 10 oder 11, dadurch gekennzeichnet, daß die Steckteile (82) mit einer Kappe (104) versehen sind, die an einem Ende des isolierenden Körpers angelenkt ist, wobei die Kappe (104) Mittel aufweist, welche die Verbindungen zwischen den Drahtpaaren erleichtert, die in Öffnungen (88, 90) der Kappe (104) und die Kontaktelemente (110, 112) einzuführen sind, wobei die Kappe (104) im Hinblick auf die die Isolierung verdrängenden Kontaktabschnitte (110, 112) so angeordnet ist, daß bei einem Schließen der angelenkten Kappe (104) auf den Isolierkörper des Steckteils (82) der elektrische Kontakt zwischen den eingeführten Drähten (144, 116) und dem Isolierung verdrängenden Kontaktabschnitt (110, 112) bewirkt wird.

13. Elektrischer Verbinder nach einem der Ansprüche 1 bis 12, dadurch gekennzeichnet, daß
- mindestens ein erstes Steckteil (82) mit Mitteln für einen elektrischen Schutz (126, 128) versehen ist, die mit einem von außen zugänglichen Kontaktelement (118) verbunden sind, das an den äußeren Abschnitten des isolierenden Körpers des Steckteils (82) angeordnet ist und
- ein Erdungselement (26) in das Basisteil (12) integriert oder nahe an diesem angeordnet ist, so daß bei einer Anbringung eines ersten Steckteils (82) auf dem Basisteil ein elektrischer Kontakt zwischen dem von außen zugänglichen Kontaktelement (118) des ersten Steckteils (82) mit dem Erdungselement (76) gebildet wird.

14. Elektrischer Verbinder nach einem der Ansprüche 1 bis 13, dadurch gekennzeichnet, daß das Basisteil (12) mit Mitteln (32, 72) versehen ist, die eine Befestigung des Basisteils (12) an einem Traggestell ermöglichen.

15. Elektrischer Verbinder nach einem der Ansprüche 1 bis 14, dadurch gekennzeichnet, daß das Basisteil (12) mit zusätzlichen Mitteln (22, 24) versehen ist für die Führung mindestens eines Paars von Drähten zu einem Steckteil auf dem Basisteil und zur Fixierung eines der Paare der Drähte.

## Revendications

1. Connecteur électrique pour connecter au moins une paire de fils d'arrivée avec au moins une paire de fils formant cavalier, comprenant :
◆ un élément de base (12) en matière isolante possédant une pluralité de positions de montage (34, 36, 38),
◆ au moins une première fiche (14) possédant un corps en matière isolante qui est adaptée pour être montée de manière amovible sur l'élément de base en au moins une des positions de montage,
◆ au moins une deuxième fiche (16) possédant un corps en matière isolante qui est adaptée pour être montée de manière amovible par-dessus la première fiche, les fiches formant un empilement,
◆ une paire d'éléments de contact métallique à l'intérieur de chacune des fiches, les éléments de contact possédant une première partie pour la connexion de ladite paire de fils et une deuxième partie pour la connexion avec l'élément de contact d'une fiche contiguë dans l'empilement,
caractérisé en ce que
◆ l'élément de base (10) est une pièce d'un seul tenant, dont le seul objet est de fournir un moyen de support pour au moins la première fiche (14) de manière telle que ladite paire de fils formant cavalier doive être connectée à au moins une dite première ou deuxième fiche (14, 16) de l'empilement et ladite paire de fils formant cavalier doive être connectée au moins à une deuxième ou première fiche de l'empilement (16, 14), respectivement.

2. Connecteur électrique conforme à la revendication 1, caractérisé en ce que la base (12) est de forme oblongue.

3. Connecteur électrique conforme à la revendication 1 ou à la revendication 2, caractérisé en ce que, au moins en un emplacement de l'élément de base (12), au moins une troisième fiche (44) est montée sur la deuxième fiche (42).

4. Connecteur électrique conforme à l'une quelconque des revendications 1 à 3, caractérisé en ce que, au moins en l'un des emplacements (38) de l'élément de base (12) une fiche seule est montée.

5. Connecteur électrique pour connecter au moins une paire de fils d'arrivée avec au moins une paire de fils formant cavalier, comprenant :
◆ un élément de base (48) en matière isolante ayant au moins une position de montage (34, 36, 38),
◆ au moins une première fiche (50) possédant un corps en matière isolante qui est adaptée pour être montée de manière amovible sur l'élément de base en au moins la position de montage,
◆ au moins une deuxième fiche (52) possédant un corps en matière isolante qui est adaptée pour être montée de manière amovible par-dessus la première fiche, les fiches formant un empilement,
◆ une paire d'éléments de contact métallique à l'intérieur de chacune des fiches, les éléments de contact possédant une première partie pour la connexion d'une paire de fils et une deuxième partie pour la connexion avec l'élément de contact d'une fiche contiguë,
caractérisé en ce que
◆ l'élément de base (48) est une pièce d'un seul tenant dont le seul objet est de fournir un moyen de support pour la première fiche (50) de telle manière que ladite paire de fils formant cavalier doive être connectée à au moins une dite première ou deuxième fiche (50, 52) de l'empilement et ladite paire de fils formant cavalier doive être connectée au moins à une deuxième ou première fiche (52, 50) de l'empilement, respectivement.

6. Connecteur électrique conforme à l'une quelconque des revendications 1 à 5, caractérisé en ce qu'un capuchon de protection (18, 54) est fourni pour être placé sur au moins la fiche la plus élevée des fiches (16, 44, 46, 52) de l'empilement.

7. Connecteur électrique conforme à l'une quelconque des revendications 1 à 6, caractérisé en ce que
◆ les fiches (14, 16, 50, 52) sont de forme identique,
◆ les deuxièmes parties de contact (84, 86 ; 138, 140) des éléments de contact (124, 132 ; 134, 136) pour établir un contact avec des éléments de contact situés dans un autre composant du connecteur, saillent au-delà de la partir finale (92, 94, 96) du corps isolant, en faisant face de manière directe ou indirecte à la base (12), la partie opposée à l'extrémité (98, 100, 102) du corps isolant étant munie d'ouvertures (105) permettant de recevoir les parties de contact saillantes d'une autre fiche placée au-dessus et
◆ moyens (20, 22) dans l'élément de base (12) sont fournis en des emplacements ayant une cavité (70) qui, lors du montage de la fiche (14, 50) sur l'élément de base (12), reçoit les extrémités saillantes des éléments de contact (124, 132).

8. Connecteur électrique conforme à la revendication 7, caractérisé en ce que la cavité (70) est remplie d'un matériau d'étanchéité.

9. Connecteur électrique conforme à l'une des revendications 1 à 7, caractérisé en ce que les moyens (20, 22) de l'élément de base (12) pour maintenir les fiches (14) et les dimensions des parties finales (92, 94, 96) des corps isolants des fiches (14, 16, 82), conçus pour être montés sur l'élément de base (12), ou pour être monté sur une autre fiche sont, en ce qui concerne leurs tolérances, choisis d'une manière telle que la force nécessaire pour ôter une fiche (16) d'une autre fiche (14) est inférieure à la force nécessaire pour ôter une fiche (14) de l'élément de base (12).

10. Connecteur électrique conforme à l'une quelconque des revendications 1 à 9, caractérisé en ce que les premières parties (110,112 ; 142, 144,) des éléments de contact métalliques (124, 132 ; 134, 136) des fiches (14, 16, 40, 42, 44, 46, 50, 52, 82) sont fournies avec des aménagements à déplacement de l'isolation pour la connexion avec les fils respectifs des paires.

11. Connecteur électrique conforme à la revendication 10, caractérisé en ce que les deuxièmes parties (84, 86 ; 138, 140) des éléments de contact (124, 132 ; 134, 136) dans les fiches (14, 16, 40, 42, 44, 46, 50, 52, 82) pour la connexion électrique avec un élément de contact situé dans une autre fiche, sont en forme de lyre, qui engage une partie latérale de la partie de contact déplaçant l'isolant (110, 112 ; 142, 144) respective de la fiche contiguë.

12. Connecteur électrique conforme à l'une quelconque des revendications 10 ou 11, caractérisé en ce que les fiches (82) sont fournies avec un capuchon (104) encastré dans une extrémité du corps isolant, le capuchon (104) possédant un moyen pour faciliter des connexions entre la paire de fils qui doit être insérée dans des ouvertures (88, 90) du capuchon (104) et les éléments de contact (110, 112), le capuchon (104) étant arrangé par rapport aux parties (110, 112) de contact à déplacement d'isolant de telle manière qu'à la fermeture du capuchon encastré (104) sur le corps isolant de la fiche (82), le contact électrique soit effectué entre les fils insérés (114, 116) et la partie de contact (110, 112) qui déplace l'isolant.

13. Connecteur électrique conforme à l'une quelconque des revendications 1 à 12, caractérisé en ce que
◆ au moins la première fiche (82) est fournie avec un moyen pour une protection électrique (126, 128) relié à un élément (118) de contact accessible de manière externe arrangé dans les parties externes du corps isolant de la fiche (82) et
◆ un élément de mise à la terre (76) est intégré dans la base (12) ou est arrangé à proximité de celle-ci, de sorte qu'au montage de la première fiche (82) sur la base (12) un contact électrique soit établi entre l'élément de contact (118) accessible de l'extérieur de la première fiche (82) et l'élément de mise à la terre (76).

14. Connecteur électrique conforme à l'une quelconque des revendications 1 à 13, caractérisé en ce que l'élément de base (12) est fourni avec des moyens (32, 72) permettant d'attacher l'élément de base (12) à un cadre support.

15. Connecteur électrique conforme aux revendications 1 à 14, caractérisé en ce que l'élément de base (12) est fourni avec des moyens supplémentaires (22, 74) pour le guidage d'au moins une paire de fils vers une fiche sur l'élément de base et pour fixer ladite paire de fils.
